# EUROPÄISCHE PATENTSCHRIFT

(11) **EP 2 913 107 B1**
(45) Veröffentlichungstag und Bekanntmachung des Hinweises auf die Patenterteilung: **07.12.2016**
(21) Anmeldenummer: 14198905.3
(22) Anmeldetag: 18.12.2014
(51) Int. Cl.: B01L 3/02, H05K 13/04

(54) **Verfahren und Vorrichtung zur Beurteilung eines Pipettenspitzenverzugs und/oder eines Spritzgusswerkzeugfehlers**
Method and device for evaluating a warping of a pipette tip and/or an injection moulding tool defect
Procédé et dispositif d'évaluation d'une déformation de pointes de pipettes et/ou une erreur d'outil de moulage par injection

(30) Priorität: 21.02.2014 DE 102014102280
(43) Veröffentlichungstag der Anmeldung: 02.09.2015
(73) Patentinhaber: Waldorf Technik GmbH & Co. KG, 78234 Engen (DE)
(72) Erfinder: Czizegg, Wolfgang, 78256 Steisslingen (DE); Shaffer, Richard, Lancaster, MA Massachusetts 01523 (US)
(74) Vertreter: Wagner, Kilian

(56) Entgegenhaltungen:
- WO-A1-00/52987
- JP-A- H10 154 899

## Beschreibung

Die Erfindung betrifft ein Verfahren zur Beurteilung eines Pipettenspitzenverzuges und/oder eines Pipettenspitzen-Spritzgusswerkzeugfehlers bei der Produktion von Pipettenspitzen gemäß dem Anspruch 1 sowie eine Vorrichtung zur Beurteilung eines Pipettenspitzenverzuges und/oder eines Spritzgusswerkzeugfehlers bei der Produktion von Pipettenspitzen, welche bevorzugt zur Durchführung des erfindungsgemäßen Verfahrens ausgebildet ist, gemäß Anspruch 9.

Pipettenspitzen, insbesondere für die automatische Analyse von Blut in Analyseapparaten, werden im Spritzgussverfahren hergestellt, wobei die zur Anwendung kommenden Spritzgussvorrichtungen üblicherweise eine Mehrzahl von kreisförmig angeordneten Kavitäten aufweisen, die jeweils von einem Spritzgusswerkzeug begrenzt sind. In der Praxis besteht das Problem, dass ein Werkzeuginnenteil durch die beim Spritzvorgang auftretenden Druckverhältnisse im Laufe der Zeit aus einer ursprünglichen Optimalposition radial herausverstellt wird, so dass sich mit der Zeit die Wandstärke der hergestellten Pipettenspitzen leicht verändert. Dies wiederum führt dazu, dass die unterschiedlichen Wandabschnitte der gespritzten Pipettenspitzen unterschiedlich schnell abkühlen, was zu einem minimalen Verzug (Krümmung der Längsachse) der Pipettenspitzen führt, wobei die Pipettenspitzenauslassöffnung von zu einem späteren Zeitpunkt hergestellten Pipettenspitzen weiter von einer zentrischen Optimalposition abweicht, als die nach einem Werkzeugwechsel hergestellten Pipettenspitzen. Überschreitet diese Abweichung ein bestimmtes Maß, sind die Pipettenspitzen insbesondere für einen automatisierten Einsatz in der Analysetechnik nicht mehr verwendbar, da diese nicht mehr zielgenau von einem Analyseapparat oder sonstigen Handhabungsvorrichtungen angesteuert werden können.

Als Qualitätssicherungsmaßnahme bei der Pipettenspitzenherstellung ist es daher bekannt, einzelne Pipettenspitzen mittels eines Greifers zu einer Kamera zu transportieren und mit dieser aus radialer Richtung aus unterschiedlichen Rotationswinkeln um eine Längserstreckungsachse der Pipettenspitze Bilddaten (Aufnahmen) zu erfassen und diese dann in der Zusammenschau im Hinblick auf die Einhaltung vorgegebener Verzugsgrenzen zu analysieren.

Bisher wurde dann, wenn eine Häufung von unzulässigen Pipettenspitzen festgestellt wurde, das Spritzgusswerkzeug der entsprechenden Kavität in Stand gesetzt oder ausgetauscht.

Vorstehend erläuterte Qualitätssicherungsmaßnahme hat sich bewährt. Es existieren jedoch auch Nachteile. So hat sich herausgestellt, dass die Analyse der seitlich aufgenommenen Bilddaten im Hinblick auf eine sichere Fehlererkennung problematisch ist, insbesondere weil auch gerade, d.h. nicht verzogene Pipettenspitzen als fehlerhaft erkannt werden, wenn diese nicht optimal gerade im Greifer aufgenommen sind. Darüber hinaus ist nachteilig, dass einzelne Pipettenspitzen der einzigen Kamera zugeführt werden müssen. Ferner besteht das Problem, dass im festgestellten Schadensfall eines Spritzgusswerkzeugs häufig kein Austauschspritzgusswerkzeug zur Verfügung steht.

Aus der WO 00/52987 A1 ist es bekannt, ein Bild einer Pipettenspitze aufzunehmen und dieses mit einem abgespeicherten Soll-Bild im Hinblick auf Identität, Verschmutzung, Beschädigung oder Verschleiß zu prüfen.

Zum weiteren Stand der Technik wird die JP H10 154899 A genannt.

Die US 2014/0036070 beschreibt ebenfalls, dass es grundsätzlich bekannt ist, Labormaterialien mittels einer Kamera zu erfassen.

Ausgehend von dem vorgenannten Stand der Technik liegt der Erfindung daher die Aufgabe zugrunde, ein zuverlässiges, einfach durchzuführendes Verfahren zur Beurteilung eines Pipettenspitzenverzuges und damit einer möglichen Spritzgusswerkzeugschädigung sowie eine Vorrichtung zur Durchführung eines solchen Verfahrens anzugeben.

Diese Aufgabe wird hinsichtlich des Verfahrens mit den Merkmalen des Anspruchs 1, hinsichtlich der Vorrichtung mit den Merkmalen des Anspruchs 9 gelöst. Vorteilhafte Weiterbildungen der Erfindung sind in den Unteransprüchen angegeben.

Die Erfindung hat erkannt, dass das bekannte Verfahren zu viele Freiheitsgrade hinsichtlich der Bewegung der einzelnen Pipettenspitzen relativ zu der einzigen seitlichen Kamera aufweist, was teilweise zu nicht verlässlichen Auswertungsergebnissen geführt hat. Die Erfindung geht daher einen anderen Weg, der es ermöglicht, Pipettenspitzen unmittelbar in einem Träger für eine Mehrzahl von Pipettenspitzen zu analysieren, beispielsweise einem später noch zu erläuternden Zwischenspeicher, in einem Zwischenpuffer oder in einer Endverpackungseinheit ohne die Notwendigkeit, die einzelne Pipettenspitze zu Analysezwecken zu einer Kamera transportieren zu müssen. Erfindungsgemäß werden dabei Bilddaten der Pipettenspitze mit unterschiedlichen Bilderfassungsmitteln getätigt und zwar aus einander gegenüberliegenden Blickrichtungen auf die beiden in Längsrichtung der Pipettenspitze beabstandeten Pipettenspitzenenden, wobei mit Hilfe von ersten Bilderfassungsmitteln erste Bilddaten von den Pipettenspitzenauslassöffnungen erfasst werden und mit Hilfe der zweiten Bilderfassungsmittel Bilddaten der gegenüberliegenden, jeweils eine Einlassöffnung der Pipettenspitze aufweisenden Endabschnitts der Pipettenspitzen.

Dabei ist es wesentlich, dass die beiden Bilderfassungsmittel, die die Pipettenspitze endseitig betrachten, fest strukturell bzw. mechanisch miteinander verbunden sind, so dass die ersten Bilddaten und die zweiten Bilddaten in einem festen Positionsverhältnis zueinander stehen. Hierdurch ist es möglich, anhand der ersten Bilddaten eine Ist-Position der Pipettenauslassöffnung, insbesondere eine Ist-Radialposition eines Mittelpunktes der Pipettenspitzenauslassöffnung zu bestimmen und anhand der zweiten Bilddaten eine Soll-Position der Pipettenspitzenauslassöffnung, insbesondere des Mittelpunktes der noch weiter bevorzugt kreisförmigen Pipettenspitzenauslassöffnung. Hierzu können entsprechende Bildkonturen der zweiten Bilddaten herangezogen werden, insbesondere Kreisringkonturen, wie beispielsweise ein Umfangsrand eines oberen, die Einlassöffnung aufweisenden Pipettenspitzenendes oder sonstige, vorzugsweise rotationssymmetrische Geometrien aus den zweiten Bilddaten. Dabei ist die Soll-Position für die Pipettenspitzenauslassöffnung bevorzugt das Zentrum einer solchen rotationssymmetrischen Kontur der zweiten Bilddaten. Durch softwaremäßiges Auswerten, insbesondere Übereinanderlegen der ersten und zweiten Bilddaten kann dabei von geeigneten Auswertemitteln ein Abweichungsmaß, insbesondere ein radiales Abweichungsmaß der Ist-Position der Pipettenspitzenauslassöffnung, insbesondere von deren Mittelpunkt von der Soll-Position ermittelt werden.

Die ersten und zweiten Bilddaten werden bevorzugt, zumindest näherungsweise gleichzeitig von den ersten und zweiten Bilderfassungsmitteln erfasst, alternativ auch zeitlich versetzt, wobei es bevorzugt ist, die fest miteinander verbundenen ersten und zweiten Bilderfassungsmitteln zunächst relativ zu der zu untersuchenden Pipettenspitze in dem vorerwähnten Träger zu positionieren.

Wesentlich ist nun, dass nicht oder nicht nur eine Aussage über einen möglichen Fehler einer einzigen Pipettenspitze erfolgt, sondern dass eine Mehrzahl von Pipettenspitzen wie zuvor beschrieben fotografiert, d.h. Bilddaten von diesen gewonnen und die Bilddaten analysiert werden und ein entsprechender, beispielsweise arithmetischer Mittelwert der erfassten Abweichungsmaße von den Auswertemitteln (Logikmittel) gebildet wird.

Grundsätzlich ist es möglich, dass von sämtlichen Pipettenspitzen, zu denen erste und zweite Bilddaten erfasst werden, das Abweichungsmaß (insbesondere ein Radialmaß) ermittelt wird. Alternativ ist es möglich, nach vorgegebenen Kriterien oder zufällig eine Auswahl von den erfassten Pipettenspitzen zu treffen und nur zu dieser Auswahl das Abweichmaß der Ist-Position von der Soll-Position zu erfassen oder nur von dieser Auswahl ein ermitteltes Abweichmaß in einem Speicher abzulegen. Ebenso ist es möglich zur Berechnung des Mittelwertes sämtliche erfassten Abweichmaße heranzuziehen oder nur eine Auswahl der ermittelten Abweichmaße, wobei die Auswahl zufällig erfolgen kann, oder was bevorzugt ist, nach bestimmten Kriterien erfolgt.

Wesentlich bei dem erfindungsgemäßen Verfahren ist, dass erste und zweite Bilddaten von einer Mehrzahl von Pipettenspitzen einer Pipettenspitzengruppe (Analysegruppe) erfasst und wie beschrieben ausgewertet werden, um einen Mittelwert bilden zu können.

Im Hinblick auf die Zusammenstellung der Pipettenspitzengruppe zur Mittelwertermittlung gibt es unterschiedliche Möglichkeiten. So ist es möglich und bevorzugt, wenn die Pipettenspitzengruppe ausschließlich Pipettenspitzen aus einer bestimmten Kavität der Spritzgussvorrichtung aufweist, wobei es besonders zweckmäßig ist, entsprechende Analysen für mehrere, vorzugsweise sämtliche Kavitäten bzw. Pipettenspitzen dieser Kavitäten durchzuführen.

Alternativ oder bevorzugt zusätzlich kann vorgesehen werden, dass die Pipettenspitzengruppe teilweise Pipettenspitzen von gleichzeitig in dem Träger angeordneten Pipettenspitzen von gleichzeitig in dem Träger angeordneten Pipettenspitzen umfasst oder Pipettenspitzen von teilweise oder ausschließlich zeitlich nacheinander, d.h. nicht gleichzeitig in den Träger angeordneten Pipettenspitzen.

Wie später noch erläutert werden wird, kann es sich bei der Pipettenspitzengruppe ausschließlich um Pipettenspitzen handeln, die zumindest zu einem Zeitpunkt gleichzeitig in dem Träger angeordnet sind. Alternativ ist es auch denkbar, dass die Pipettenspitzengruppe Pipettenspitzen umfasst, die nur zu unterschiedlichen Zeitpunkten in dem Träger vorhanden sind.

Durch das erfindungsgemäße Verfahren können im Stand der Technik auftretende Fehlauswertungen vermieden werden, die darauf zurückzuführen sind, dass die Pipettenspitze beispielsweise aufgrund eines Grates nicht exakt in der vorgegebenen Position in einem Pipettenspitzenhalter sitzt. Auch ist es möglich, dass vorgenannter Träger für eine Mehrzahl von Pipettenspitzen von einem Zwischenpuffer gebildet wird, in dem gleichzeitig mehrere Pipettenspitzen, vorzugsweise ein einziger Schuss von Pipettenspitzen, aus unterschiedlichen, vorzugsweise sämtlichen Kavitäten der Spritzgussvorrichtung vor dem Überführen in einem, vorzugsweise wie zuvor ausgebildeten Zwischenspeicher mit kavitätenreinen Untergruppen überführt werden.

Auch hier ist die Zuordnung der einzelnen Pipettenspitzen zu der jeweiligen zugehörigen Kavität ohne weiteres möglich, auch ist die Information der Winkelposition bzw. des Einspritzpunktes möglich. Ein Zwischenpuffer kann bevorzugt dann angeordnet werden um einen Entnahmegreifer zu entlasten, da dieser die Pipettenspitzen nicht mehr unmittelbar in den Zwischenspeicher überführen muss, sondern dass diese Funktionalität von einem Überführungsgreifer übernommen werden kann. So ist es alternativ möglich, als Träger eine Endverpackungseinheit heranzuziehen, in welcher eine Mehrzahl von Pipettenspitzen nebeneinander angeordnet ist, wobei die Pipettenspitzen in der Endverpackung entweder kavitätenrein sind, d.h. aus einer einzigen Kavität stammen oder alternativ die Endverpackungseinheit eine Mehrzahl von kavitätenreinen Gruppen aufweist, wobei die Anzahl der Gruppen bevorzugt geringer ist als die Anzahl der Kavitäten der Spritzgussvorrichtung.

Das erfindungsgemäße Verfahren und die erfindungsgemäße Vorrichtung zur Ausführung eines solchen Verfahrens bieten aufgrund der digitalen Bild-Aufnahme der Pipettenspitzen aus zwei einander gegenüberliegenden Richtungen, insbesondere Axialrichtungen, erhebliche Vorteile im Hinblick auf die Zuverlässigkeit des Auswerteergebnisses, da die Relativposition der jeweils zu analysierenden Pipettenspitze zu den Bilderfassungsmitteln nur noch eine untergeordnete Rolle spielt, da erfindungsgemäß die Bilderfassungsmittel fest zueinander positioniert sind. Darüber hinaus ist das erfindungsgemäße Verfahren wesentlich effizienter, da schnell nacheinander eine Mehrzahl von in den Träger angeordneten Pipettenspitzen, vorzugsweise durch entsprechendes, gleichzeitiges Verstellen der beiden fest miteinander verbundenen Bilderfassungsmittel durchgeführt werden kann, und auf eine einzelne Überführung der Pipettenspitzen zu einer Kamera verzichtet wird.

Darüber hinaus bietet die erfindungsgemäße Mittelwertbildung von Abweichungsmaßen eine erhöhte Aussagekraft des Analyseergebnisses und die Erfindung ermöglicht, wie später noch erläutert werden wird, im Rahmen einer vorteilhaften Weiterbildung erstmals eine Prognosemöglichkeit zur Prognose eines Werkzeugwechsel- bzw. Austauschzeitpunktes, so dass dann sichergestellt ist, dass dieser Zeitpunkt frühzeitig bekannt wird, dass ein entsprechendes Austauschwerkzeug zur Verfügung steht.

Wie erwähnt, sind die ersten und zweiten Bilderfassungsmittel zur Erfassung der ersten bzw. zweiten Bilddaten fest zueinander positioniert und aus zwei gegensätzlichen Richtungen auf die Pipettenspitze gerichtet, wobei es grundsätzlich möglich ist, dass die Bilderfassungsmittel und damit die sich ergebenden Bildebenen einen geringen Winkel von beispielsweise bis zu 30°, vorzugsweise weniger zueinander aufweisen, und dass dies bei der Auswertung der Bilddaten entsprechend berücksichtigt wird. Ganz besonders bevorzugt ist es jedoch, wenn die Bilderfassungsmittel und damit die Bildebenen der ersten und zweiten Bilddaten parallel zueinander ausgerichtet sind und vorzugsweise auch parallel zu einer Trägerebene, in welcher die mehreren Pipettenspitzen nebeneinander angeordnet sind.

Ganz besonders bevorzugt ist es, wenn die Bildebenen der ersten und zweiten Bilddaten senkrecht ausgerichtet sind zur Längserstreckungsrichtung einer in den Träger aufgenommenen (optimalen) Referenzpipette, bei der der Mittelpunkt der Pipettenspitzenöffnung im Zentrum einer axialen Projektion eines kreisförmigen Umfangsrandes der Einlassöffnung angeordnet ist - anders ausgedrückt befindet sich bei der Referenzpipette der Mittelpunkt der Pipettenspitzenöffnung auf der Längsmittelachse der Referenzpipette (Ist-Position = Soll-Position).

Um, wie später noch erläutert werden wird, die durch Bildanalyse ermittelten Daten bzw. daraus resultierenden Mittelwerte für eine Prognose für einen bevorzugten Werkzeugwechsel bzw. Reparaturzeitpunkt nutzen zu können, ist weiterbildungsgemäß vorgesehen, dass die Verfahrensschritte a-c für mehrere Pipettenspitzen für unterschiedlich zusammengesetzte, bevorzugt zeitlich nacheinander produzierte Pipettenspitzengruppen durchgeführt werden und dadurch zeitlich beabstandete Mittelwerte erfasst bzw. erhalten werden, die als Basis für die Prognose für einen Zeitpunkt herangezogen werden können, an dem ein vorgegebener zulässiger Mittelwert (Grenzwert), insbesondere mit einer vorgegebenen Wahrscheinlichkeit erreicht oder überschritten wird und/oder an dem das Spritzgusswerkzeug der entsprechenden Kavität ausgetauscht oder in Stand gesetzt werden sollte. Die Prognose wird auf Basis an sich bekannter mathematischer Methoden auf Basis mehrerer zeitlich beabstandet ermittelter Mittelwerte (Mittelwertreihe) durchgeführt. Beispielsweise durch Extrapolation (Hochrechnung) oder Trendprognose. Grundsätzlich sind auch alternative, eindimensionale oder multidimensionale Verfahren für eine quantitative Prognose auf Basis der erfassten Mittelwerte einsetzbar.

Zusätzlich oder alternativ zur zuvor beschriebenen Prognosemitteln bzw. einer entsprechenden Ausbildung der Auswertemittel ist es möglich jeden einzelnen ermittelten Mittelwert im Hinblick auf das Erreichen oder Überschreiten eines kritischen Mittelwertes (Grenzwert) zu überprüfen und ein Erreichen bzw. Überschreiten entsprechend, beispielsweise optisch und/oder akustisch zu signalisieren.

Wie eingangs bereits angedeutet zeichnet sich der, bevorzugt horizontal ausgerichtete Träger dadurch aus, dass dieser gleichzeitig eine Mehrzahl von, vorzugsweise in einer Horizontalebene nebeneinander angeordnete Pipettenspitzen tragen kann und noch weiter bevorzugt auch während der Bilddatenerfassung trägt. Als Zwischenspeicher kann beispielsweise ein in der EP 2 323 930 B1 der Anmelderin beschriebener Zwischenspeicher dienen, in welchem bevorzugt, wie in der vorhergehenden vorerwähnten Druckschrift beschrieben, Pipettenspitzen gleichmäßig auf Untergruppen verteilt abgelegt werden, wobei bevorzugt die Anzahl der Pipettenspitzen einer vollständigen Untergruppe der Anzahl von in eine Endverpackungseinheit zu ladenden Kunststoffspritzgussteilen oder einem ganzzahligen Teiler dieser Anzahl entspricht. Ganz besonders bevorzugt ist, wenn die Anzahl der Untergruppen der Anzahl der Kavitäten der Spritzgussvorrichtung entspricht. Der Vorteil der Wahl des Zwischenspeichers als Träger besteht zum einen darin, dass dieser zur Gewährleistung einer kavitätenreinen oder kavitätengeordneten Endverpackung sowieso vorhanden sein sollte und darüber hinaus darin, dass die Auswertemittel zu jeder Pipettenspitze bzw. Untergruppe eine Information darüber erhalten, aus welcher Kavität, d.h. aus welchem Spritzgusswerkzeug die untersuchte Pipettenspitze stammt.

Darüber hinaus ist dann, wenn die Pipettenspitzen bei der Überführung in den Zwischenspeicher nicht oder nur definiert um ihre Achse verdreht werden, die Position des Einspritzpunktes jeder Pipettenspitze bekannt, wodurch es möglich ist, zur Mittelwerterfassung, wie später noch erläutert werden wird, nur diejenigen Pipettenspitzen bzw. Abweichungsmaße heranzuziehen, bei denen die Ist-Position der Pipettenspitzenauslassöffnung in einem bestimmten, vorgegebenen Flächenabschnitt der ersten Bilddaten (genauer in einem vorgegebenen Axialprojektionsflächenabschnitt der Pipettenspitze) relativ zu dem Einspritzpunkt der Pipettenspitze angeordnet ist, da sich herausgestellt hat, dass mit einer gewissen Wahrscheinlichkeit außerhalb dieses Abschnittes angeordnete Pipettenspitzenöffnungen bzw. deren Versatz nicht auf den hier interessierenden systematischen bzw. zunehmenden Spritzgusswerkzeugfehler zurückzuführen sind.

Es ist zwar bevorzugt, dass die Pipettenspitzen nach der Überprüfung in einem Rack überführt werden, jedoch nicht zwingend notwendig. Denkbar ist auch, insbesondere die für gut befundenen Pipettenspitzen als Schüttgut weiter zu transportieren.

Wie bereits angedeutet, ist es bevorzugt, nicht sämtliche Pipettenspitzen, zu denen Bilddaten erfasst werden, zur Ermittlung der Abweichungsmaße heranzuziehen oder nicht sämtliche ermittelten Abweichungsmaße für eine Mittelwertbildung heranzuziehen, sondern nur eine Auswahl der Abweichungsmaße und damit von Pipettenspitzen.

Bevorzugt werden nur die Bilddaten von Pipettenspitzen einer Pipettenspitzengruppe zur Ermittelung des jeweils zugehörigen Abweichungsmaßes der Ist-Position von der Sollposition herangezogen, bei denen sich die Pipettenspitzenauslassöffnung in einem vorgegebenen Flächenabschnitt der ersten Bilddaten befindet, wobei es besonders bevorzugt ist, wenn dieser erste Flächenabschnitt in einer festen geometrischen Position zu einem Einspritzpunkt der entsprechenden Pipettenspitze angeordnet ist, wobei die Information über die Einspritzpunktposition dann zuverlässig bekannt bzw. erhalten werden kann, wenn die Pipettenspitzen nicht oder nur definiert um ihre Längserstreckungsachse gedreht werden bei ihrer Überführung aus der jeweiligen Kavität in den Träger. Diese Information steht den Auswertemitteln zur Verfügung. So hat es sich herausgestellt, dass mit einer erhöhten Wahrscheinlichkeit Pipettenspitzen, deren Pipettenspitzenauslassöffnung außerhalb dieses Flächenbereichs liegt, aufgrund anderer Umstände, jedenfalls in der Regel nicht aufgrund des systematischen Spritzgusswerkzeugfehlers eine Abweichung der Ist-Position von der Soll-Position aufweisen.

Ganz besonders bevorzugt handelt es sich bei dem vorgenannten Flächenabschnitt um einen Kreissegmentabschnitt der Bilddaten, vorzugsweise mit einem Kreissegmentwinkel von gleich oder kleiner 180°, vorzugsweise von gleich oder kleiner 120°, noch weiter bevorzugt von gleich oder kleiner 90°, noch weiter bevorzugt von gleich oder kleiner 30°, wobei es ganz besonders bevorzugt ist, wenn dieses Kreissegment in einer von dem Einspritzpunkt der zugehörigen Pipette abgewandten Pipettenhälfte befindet, wobei es hoch weiter bevorzugt ist, wenn die gedachte Verlängerung einer Winkelhalbierenden des Kreissegmentes den Einspritzpunkt schneidet.

Zusätzlich oder alternativ können zur Ermittlung des Mittelwertes nur die Abweichungsmaße herangezogen werden, die von Pipettenspitzen stammen, bei denen vorstehende Bedingung/Bedingungen hinsichtlich der Position der zugehörigen Pipettenspitzenauslassöffnung erfüllt ist/sind.

Die Erfindung führt auch auf eine Vorrichtung, die vorzugsweise ausgebildet ist zur Durchführung eines zuvor beschriebenen Verfahrens. Diese Vorrichtung umfasst Positioniermittel zum Überführen von Pipettenspitzen aus einer mehrere, insbesondere kreisförmig angeordnete, von jeweils einem Spritzgusswerkzeug begrenzte Kavitäten aufweisende Spritzgussvorrichtung in einen Träger, vorzugsweise einen Zwischenspeicher, einen Zwischenpuffer oder eine Endverpackungseinheit, wobei die Kavitäten der Spritzgussvorrichtung ausgebildet sind, um damit Pipettenspitzen zu erzeugen. Ferner umfasst die Vorrichtung erste und zweite, fest zueinander angeordnete Bilderfassungsmittel, die vorzugsweise senkrecht zu einer Achse ausgerichtet sind, wobei noch weiter bevorzugt diese Achse mit der Längsmittelachse einer optimalen Referenzpipette zusammenfällt, bei der sich der Mittelpunkt der Pipettenspitzenauslassöffnung auf der Längsmittelachse befindet.

Besonders bevorzugt ist es, wenn die ersten und zweiten Bilderfassungsmittel auf unterschiedliche Seiten, insbesondere eine Oberseite und eine Unterseite des Trägers ausgerichtet sind - da bevorzugt die beiden Pipettenspitzenenden sich auf unterschiedlichen Seiten des Trägers befinden. Signalleitend mit den Bilderfassungsmitteln sind Auswertemittel, die in Weiterbildung der Erfindung als Prognosemittel ausgebildet sind vorgesehen, die Abweichungsmaße der Ist- von der Soll-Position von mehreren Pipettenspitzen ermittelt, entweder von sämtlichen Pipettenspitzen einer Pipettenspitzengruppe oder Auswahl von Pipettenspitzen dieser Pipettenspitzengruppe wobei aus den ermittelten Abweichungsmaßen oder einer Auswahl der Abweichungsmaßnahme ein Mittelwert gebildet wird, wie im Rahmen des Verfahrens erläutert, werden zeitlich nacheinander Mittelwerte ermittelt, die dann zur mathematischen Prognose eines kritischen Zeitpunktes für ein Überschreiten eines Grenzwertes bzw. für einen Werkzeugwechsel oder Austauschzeitpunkt dienen.

Die Auswertemittel sind dabei die Position des Einspritzpunktes bei der Bestimmung des Flächenabschnittes und damit bei der Auswahl der Pipettenspitzen der Pipettenspitzengruppe und/oder der Auswahl der Abweichungsmaße berücksichtigend ausgebildet. Insbesondere dann, wenn die Pipettenspitzen bei der Überführung in den Träger nicht um ihre Rotationsachse rotiert werden, variiert die Position des Einspritzpunktes in Umfangsrichtung je nach kavitätenreiner Untergruppe bzw. je nach dem, aus welcher Kavität die Pipettenspitze stammt in Umfangsrichtung, da die Kavitäten und damit die Spritzgusswerkzeuge bevorzugt auf einer Kreisbahn um ein gemeinsames Zentrum herum angeordnet sind.

Da bevorzugt zu jedem Zeitpunkt der Zusammenhang klar ist, aus welcher Kavität und damit aus welchem Spritzgusswerkzeug eine jeweilige Pipettenspitze stammt, ist den Auswertemitteln somit auch die Position des Einspritzpunktes, insbesondere die Umfangswinkelposition des Einspritzpunktes bekannt. Für den Fall, dass während der Überführung ein Verdrehen um eine Längsachse der Pipettenspitze erfolgt, so geschieht dies um einen definierten, den Auswertemitteln bekannten Umfangswinkel, so dass auch hier die Position des Einspritzpunktes und damit der mit der Position des Einspritzpunktes im Zusammenhang stehende Flächenanteil, in dem die Spritzgussauslassöffnung liegen muss, bekannt ist.

Die erfindungsgemäß ausgestaltete Vorrichtung bzw. das erfindungsgemäße Verfahren ermöglichen es auch Pipettenspitzen einer Pipettenspitzengruppe oder von bestimmten Pipettenspitzen bestimmte Abweichungsmaße nicht zu berücksichtigen, wenn sich aus den Bilddaten, insbesondere den zweiten Bilddaten ergibt, dass die Pipettenspitze nicht optimal im Träger positioniert ist, beispielsweise aufgrund des Vorhandenseins eines Grades. In diesem Fall ist nämlich das Abweichen der Ist-Position der Pipettenspitzenauslassöffnung von der Sollposition mit hoher Wahrscheinlichkeit auf diese Fehlpositionierung und nicht auf einen Pipettenspitzenverzug zurückzuführen.

Die Erfindung führt auch auf eine Spritzgussanlage mit einer Spritzgussvorrichtung, umfassend mehrere, insbesondere kreisförmig angeordnete, von jeweils einem Spritzgusswerkzeug begrenzte, zur Herstellung von Pipettenspitzen ausgebildete Kavitäten sowie umfassend eine nach dem Konzept der Erfindung ausgebildete Vorrichtung, vorzugsweise zur Durchführung eines erfindungsgemäßen Verfahrens.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:

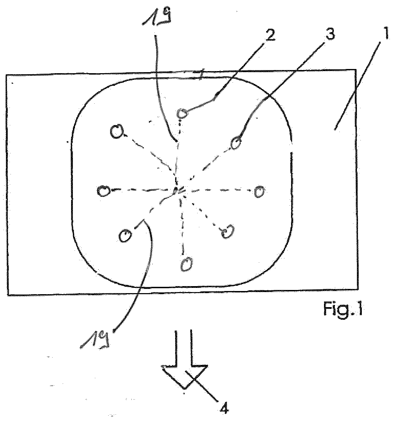

- Fig. 1: eine Spritzgussvorrichtung die in dem gezeigten Ausführungsbeispiel eine lediglich beispielhafte fixe Anzahl von 8 Kavitäten bzw. Spritzgusswerkzeugen zum gleichzeitigen Herstellen von 8 Pipettenspitzen aufweist. Die Anzahl der Kavitäten wie auch deren Positionierung können variieren. Für die weitere Betrachtung wird davon ausgegangen, dass insgesamt zwei Spritzgussvorrichtungen gleicher Bauart mit jeweils 8 Kavitäten vorgesehen sind, so dass im Rahmen der Anlage insgesamt 16 Pipettenspitzen gleichzeitig hergestellt werden können. Bevorzugt werden grundsätzlich Werkzeuge mit acht oder einem Vielfachen von 8 Werkzeugen eingesetzt (z.B. 16, 32, 64, 96 oder 128), wobei auch davon abweichende Kavitätenzahlen (z.B. 12, 20, etc.) realisierbar sind.
- Fig. 2a bis Fig. 2e: einen Zwischenspeicher nach jeweils einer unterschiedlichen Anzahl von Entnahmezyklen, wobei in den Ausführungsbeispiel auf dem Zwischenspeicher Untergruppen entstehen, die bei jedem Entnahmezyklus, d.h. nach jedem Schuss jeweils um ein Kunststoffspritzgussteil erweitert werden.
- Fig. 3: ein vergrößertes Detail aus Fig. 2e,
- Fig. 4: eine nach dem Konzept der Erfindung ausgebildete Vorrichtung zur Beurteilung eines Pipettenverzugs und eines Spritzgusswerkzeugfehlers,
- Fig. 5: eine Detailansicht aus Fig. 4 mit am Beispiel einer optimalen bzw. fehlerfreien oder Reverenzpipettenspitze,
- Fig. 6: ein vergrößertes Detail aus Fig. 4 am Beispiel einer extrem verzogenen Pipettenspitze, bei der die Ist-Position stark in radialer Richtung abweicht von der Sollposition,
- Fig. 7a: zweite Bilddaten der Pipettenspitze gemäß Fig. 5a,
- Fig. 7b: erste Bilddaten der Pipettenspitze gemäß Fig. 5a,
- Fig. 7c: für einen Vergleich übereinander gelegte erste und zweite Bilddaten der Pipettenspitze gemäß Fig. 5,
- Fig. 8a: zweite Bilddaten der Pipettenspitze gemäß Fig. 6,
- Fig. 8b: erste Bilddaten der Pipettenspitze gemäß Fig. 6,
- Fig. 8c: zu Vergleichszwecken übereinander gelegte erste und zweite Bilddaten der Pipettenspitze gemäß Fig. 6,
- Fig. 9: ein Diagramm zu Erläuterung einer möglichen Ausgestaltung der Funktionsweise von Auswertemitteln zur Errechnung einer Prognose für einen empfohlenen Spritzgusswerkzeugwechsel- oder Reparaturzeitpunkt.

In den Figuren sind gleiche Elemente und Elemente mit gleicher Funktion mit den gleichen Bezugszeichen gekennzeichnet.

In Fig. 1 ist als Teil einer Spritzgussanlage eine Spritzgussvorrichtung 1, umfassend acht jeweils eine Kavität 2 begrenzenden Spritzgusswerkzeugen 3 gezeigt, die ausgebildet sind, um bei einem Schuss acht Pipettenspitzen herzustellen. Die Spritzgussanlage umfasst eine weitere, nicht gezeigte, baugleiche Spritzgussvorrichtung, so dass insgesamt 16 Pipettenspitzen gleichzeitig hergestellt werden können. Jeder Spritzgussvorrichtung sind, beispielsweise als Sauggreifer ausgebildete Positioniermittel 4 zugeordnet, mit denen die 2 x acht Pipettenspitzen nach dem Spritzgussvorgang entweder unmittelbar in eine Endverpackung überführt werden, oder bevorzugt, wie später noch erläutert werden wird, in einem Zwischenspeicher, in dem sie in kavitätenreinen Untergruppen gruppiert werden oder in einen Zwischenpuffer, aus dem sie mittels nicht gezeigter Überführmittel als Teil von anspruchsgemäßen Positioniermitteln dann entweder in einen Zwischenspeicher oder alternativ unmittelbar in eine Endverpackungseinheit überführt werden.

In Fig. 1 ist die kreisförmige Anordnung der Kavitäten 2 zu erkennen, die jeweils über Einspritzkanäle 19 versorgt werden, wobei die Einspitzkanäle 19 ausgehen von einem gemeinsamen Zentrum, so dass der Einspritzpunkt von Kavität zu Kavität in Umfangsrichtung wandert bzw. bei den jeweiligen Pipettenspitzen an einer unterschiedlichen Umfangswinkelposition angeordnet ist.

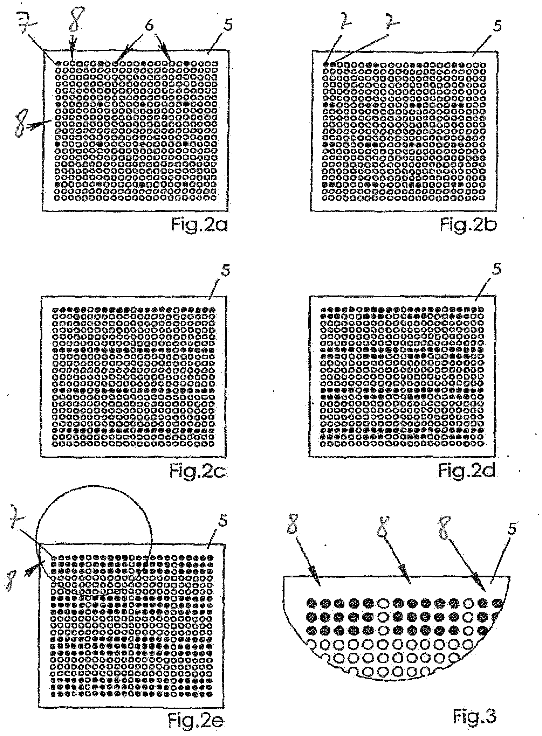

In den Fig. 2a bis 3 ist nun ein Träger 5 für eine Mehrzahl von Pipettenspitzen gezeigt, wobei eine Vielzahl von Pipettenspitzen in einer Horizontalebene angeordnet werden können. Zu diesem Zweck ist der Träger 5 als Lochblech ausgestaltet, wobei die Pipettenspitzen steckend in den Löchern aufgenommen werden können. Die Löcher, bzw. allgemein Aufnahmen 6 sind ebenfalls in den Figuren gezeigt. Die Pipettenspitzen sind mit dem Bezugszeichen 7 gekennzeichnet. Die Ausbildung des Trägers 5 als Zwischenspeicher ist bevorzugt, jedoch nicht zwingend.

Bei dem Träger kann es sich beispielsweise auch um eine Endverpackungseinheit oder einen Zwischenpuffer handeln, wobei in letzterem bevorzugt gleichzeitig immer nur ein einziger Schuss von Pipettenspitzen aufgenommen ist. In den Träger 5, hier dem Zwischenspeicher, werden jedenfalls die Pipettenspitzen 7 in kavitätenreine Untergruppen 8 gruppiert, so dass später noch zu erläuternde Auswertemittel "wissen", aus welcher Kavität und damit welchem Spritzgusswerkzeug die jeweils untersuchte Pipettenspitze stand, was unter anderem wichtig ist für die Bestimmung des Einspritzpunktes, wie im allgemeinen Beschreibungsteil erläutert ist.

Allgemein gilt, dass das erfindungsgemäße Verfahren bevorzugt jeweils für Pipettenspitzen aus den unterschiedlichen kavitätenreinen Untergruppen durchgeführt wird, um somit unabhängig voneinander Aussagen für die einzelnen Spritzgusswerkzeuge treffen zu können.

Im Hinblick auf die Funktionsweise des Gruppierverfahrens wird zur Vermeidung von Wiederholungen auf die EP 2 323 930 B1 und dort insbesondere auf die Figurenbeschreibung zu den Figuren 1 bis 3 verwiesen, die im Wesentlichen den Figuren 1 bis 3 vorliegender Anmeldung entsprechen.

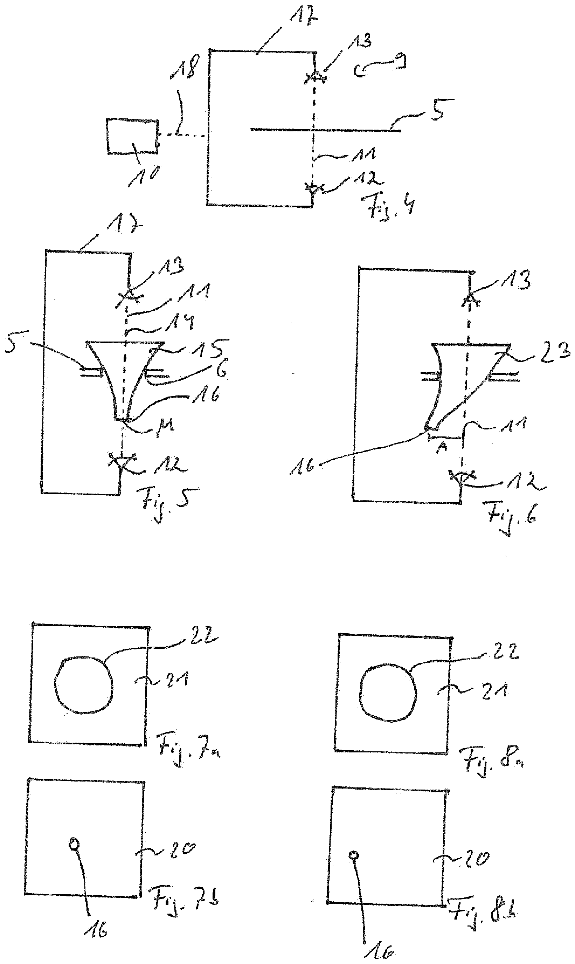

In Fig. 4 ist ausschnittsweise und stark schematisiert eine Vorrichtung 9 zur Beurteilung eines Pipettenspitzenverzuges sowie aufgrund der Prognosefunktionalität von Auswertemitteln 10 zur Vorhersage eines empfohlenen Werkzeugwechsel- oder Reparaturzeitpunktes gezeigt. Die Vorrichtung 9 umfasst auf einer gemeinsamen Achse 11 angeordnete erste Bilderfassungsmittel 12 sowie zweite Bilderfassungsmittel 13, zur Erfassung von ersten bzw. zweiten Bilddaten von in einem Träger 5, insbesondere einem Zwischenspeicher aufgenommenen Pipettenspitzen. Die Achse 11 verläuft senkrecht zur, insbesondere horizontalen Flächenerstreckung des Trägers 5 und damit zur Anordnungsebene von in dem Träger aufgenommenen Pipettenspitzen. Die Sensoren der Bilderfassungsmittel 12, 13 sind dabei parallel zur Flächenerstreckung des Trägers 5 ausgerichtet, so dass die Bildebenen der entsprechenden Bilddaten, ebenfalls parallel zu dem Träger bzw. zu dessen Flächenerstreckung liegen und somit senkrecht zu einer Längsmittelachse 14 einer Referenzpipette 15, wie sie beispielhaft in Fig. 5 dargestellt ist. Bei dieser befindet sich ein Mittelpunkt M einer (unteren) Pipettenspitzenauslassöffnung 16 auf der Längsmittelachse 14, die bei einer Referenzpipette bevorzugt mit der Achse 11 der Bilderfassungsmittel 12, 13 zusammenfällt.

Die ersten und zweiten Bilderfassungsmittel 12, 13 sind beispielhaft mechanisch über eine Verbindungsstruktur 17 fest miteinander verbunden sowie signalleitend verbunden über eine Signalleitung 18 mit den Auswertemitteln 10. Durch Verstellen der Verbindungsstruktur 17 mittels eines nicht gezeigten Antriebes können die Bilderfassungsmittel 12, 13 relativ zu einzelnen Pipettenspitzen im Träger 5 positioniert werden.

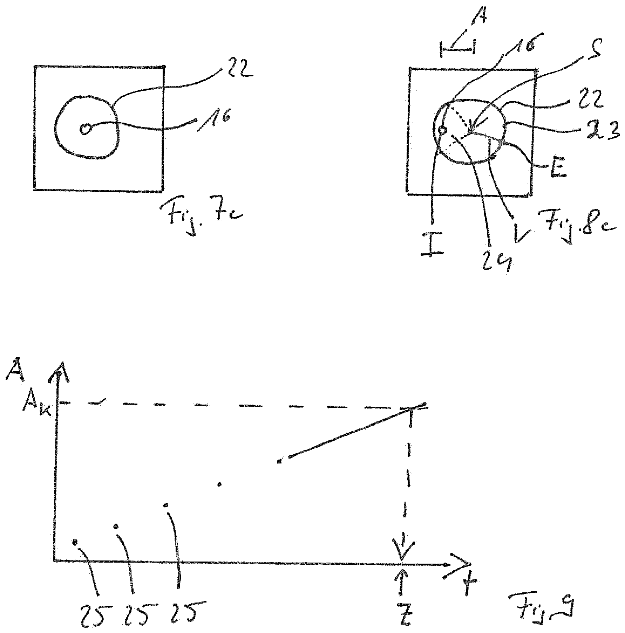

In Fig. 5 ist, wie erläutert, ein möglicher vergrößerter Detailausschnitt aus Fig. 4 am Beispiel einer von mehreren Pipettenspitzen gezeigt. Konkret ist eine optimal gefertigte oder Referenz-Pipette 15 zu sehen, die in einer Aufnahme 6 im Träger 5 aufgenommen ist. Die ersten Bilderfassungsmittel 12 erfassen in Fig. 7 beispielhaft dargestellte erste Bilddaten, auf denen insbesondere die Pipettenspitzenauslassöffnung 16 zu erkennen ist. Die fest zu den ersten Bilderfassungsmittel 12 positionierten zweiten Bilderfassungsmittel 13 erfassen im Rahmen von zweiten in Fig. 7a gezeigten Bilddaten 21, das der Pipettenspitzenauslassöffnung 16 gegenüberliegende Pipettenspitzenende, welches sich auf der gegenüberliegenden Seite des Trägers 5, hier beispielhaft und bevorzugt oben befindet. Zu erkennen ist eine Kreiskontur 22 des oberen Endes. Im Rahmen geeigneter Bilddatenauswertemittel der Auswertemittel 10, werden die ersten und zweiten Bilddaten 20, 21 ausgewertet, was beispielsweise durch softwaremäßiges Übereinanderlegen der ersten und zweiten Bilddaten 20, 21 erfolgen kann, wie dies in Fig. 7c gezeigt ist. Zu erkennen ist, dass sich die Pipettenspitzenauslassöffnung 16 der ersten Bilddaten 20 im Zentrum der Kreiskontur 22 der zweiten Bilddaten 21 befindet. Dies bedeutet, dass sich Ist-Position der Pipettenspitzenauslassöffnung 16, konkret von deren Mittelpunkt auf der Soll-Position befindet, wie dies gewünscht ist bzw. bei einem neuen Spritzgusswerkzeug der Fall ist.

In Fig. 6 ist nun die Detaildarstellung aus Fig. 4 anhand einer verzogenen Pipettenspitze 23 gezeigt. Bereits hier ist zu erkennen, dass sich die Pipettenspitzenauslassöffnung 16 nicht auf der Achse 11 bzw. nicht im Zentrum einer axialen Projektion einer Kreiskontur des oberen Endes der Pipettenspitze 23 befindet, sondern um das Abweichungsmaß A in radialer Richtung versetzt ist. Eine solche Pipettenspitze 23 würde Probleme beim automatisierten Einsatz der Pipettenspitze 23 bereiten.

Mit Hilfe der ersten und zweiten Bilderfassungsmittel 12, 13 werden erste Bilddaten 20 (vgl. Fig. 8b) und zweite Bilddaten 21 (vgl. Fig. 8a) erhalten. Die zweiten Bilddaten 21 der Beispiele Fig. 8a und 7a entsprechen sich im Wesentlichen. Zu erkennen ist wieder die Kreiskontur 22. Bei den ersten Bilddaten 20 gemäß Fig. 8b ist zu erkennen, dass sich die Pipettenspitzenauslassöffnung 16 nach weiter links verschoben befindet, was aus den übereinander gelegten Bilddaten 20, 21 gemäß Fig. 8c besonders gut ersichtlich ist. Eine Ist-Position I weicht in radialer Richtung deutlich um das Abweichungsmaß A von der Soll-Position S im Zentrum der Kreiskontur 22 ab.

In Fig. 8c ist zu erkennen, dass sich die Pipettenspitzenauslassöffnung 16 in einem hier beispielhaft als Kreissegmentabschnitt ausgebildeten Teilabschnitt 24 (Flächenabschnitt, Bildabschnitt) befindet, wobei dieser Teilabschnitt 24 sich in einer von dem Einspritzpunkt E der Pipettenspitze 23 angeordneten Pipettenspitzenhälfte befindet. Konkret trifft die eine gedachte Verlängerung V einer Winkelhalbierenden des Kreissegmentabschnittes diesen Einspritzpunkt E. Da, wie bereits mehrfach erläutert, die Auswertemittel 10 die Position des Einspritzpunktes E kennen, kann der Teilabschnitt 24 bei der Auswertung berücksichtigt werden, insbesondere bei der Auswahl der Pipettenspitzen einer Pipettenspitzengruppe, zu der ein Abweichungsmaß A überhaupt festgestellt wird oder um nur die Abweichungsmaße der Pipettenspitzengruppe zu berücksichtigen, bei denen sich die Pipettenspitzenauslassöffnung 16 in dem Teilabschnitt 24 befindet.

Anhand von Fig. 9 wird am Beispiel eines angenommenen linearen Zusammenhangs die Funktionsweise der Auswertemittel gekennzeichnet. Zu erkennen sind über die Zeitachse t aufgetragene Mittelwerte 25 von Abweichungsmaßen A der Ist-Position I von der Soll-Position S. Durch Extrapolation kann ein Zeitpunkt Z bestimmt werden, an welchem ein kritisches Abweichungsmaß A_{K} überschritten werden wird. Zu diesem Zeitpunkt ist ein Spritzgusswerkzeugwechsel oder eine Spritzgusswerkzeugreparatur notwendig bzw. empfohlen. Das Ausführungsbeispiel gemäß Fig. 9 soll die Funktionsweise der Auswertemittel nicht beschränken. Selbstverständlich können andere Prognosemethoden eingesetzt und/oder andere funktionale Zusammenhänge der Auswertereihe bzw. Mittelwertreihe gegeben sein.

### Bezugszeichenliste

- 1: Spritzgussvorrichtung
- 2: Kavitäten
- 3: Spritzgusswerkzeug
- 4: Positioniermittel
- 5: Träger
- 6: Aufnahme
- 7: Pipettenspitzen
- 8: Untergruppen
- 9: Vorrichtung
- 10: Auswertemittel
- 11: Achse
- 12: erste Bilderfassungsmittel
- 13: zweite Bilderfassungsmittel
- 14: Längsmittelachse
- 15: Referenzpipettenspitze
- 16: Pipettenspitzenauslassöffnung
- 17: Verbindungsstruktur
- 18: Signalleitung
- 19: Einspritzkanäle
- 20: erste Bilddaten
- 21: zweite Bilddaten
- 22: Kreiskontur (Kreisringkontur)
- 23: verzogene Pipettenspitze
- 24: Teilabschnitt
- 25: Mittelwerte

- M: Mittelpunkt
- A: Abweichmaß
- E: Einspritzpunkt
- I: Ist-Position
- S: Sollposition
- A_{K}: kritisches Abweichmaß
- V: Verlängerung
- Z: Zeitpunkt

## Patentansprüche

1. Verfahren zur Beurteilung eines Pipettenspitzenverzugs und/oder eines Spritzgusswerkzeugfehlers bei der Produktion von Pipettenspitzen (7), mit den Schritten:
a) Überführen von Pipettenspitzen (7) aus einer mehrere, insbesondere kreisförmig angeordnete, von jeweils einem Spritzgusswerkzeug (3) begrenzte Kavitäten (2) aufweisenden Spritzgussvorrichtung (1) in einen Träger (5) zur gleichzeitigen Aufnahme (6) einer Mehrzahl von Pipettenspitzen (7),
b) Jeweiliges Erfassen von ersten Bilddaten (20) von Pipettenspitzenauslassöffnungen (16) von in dem Träger (5) gleichzeitig und/oder zeitlich nacheinander angeordneten Pipettenspitzen (7) einer Pipettenspitzengruppe zur Bestimmung der Ist-Position (I) der Pipettenspitzenauslassöffnung (16) der jeweiligen Pipettenspitze (7) mit Hilfe von ersten Bilderfassungsmitteln (12),
c) Jeweiliges Erfassen von zweiten Bilddaten (21) der Pipettenspitzen (7) der Pipettenspitzengruppe zur Bestimmung einer Soll-Position (S) der Pipettenspitzenauslassöffnung (16) der jeweiligen Pipettenspitze (7) mit Hilfe von zweiten Bilderfassungsmitteln (13), die fest relativ zu den ersten Bilderfassungsmitteln (12) positioniert sind, wobei die ersten Bilderfassungsmittel (12) die ersten Bilddaten (20) aus einer Blickrichtung auf ein die Pipettenspitze (7) aufweisendes unteres Pipettenspitzenende erfassen und die zweiten Bilderfassungsmittel (13) mit einer entgegengesetzten Blickrichtung auf ein eine Einlassöffnung aufweisendes oberes Pipettenspitzenende,
d) Ermitteln der Abweichungsmaße (A) der jeweiligen Ist-Position (I) der Pipettenspitzenauslassöffnungen (16) der Pipettenspitzengruppe oder einer Auswahl von Pipettenspitzen (7) der Pipettenspitzengruppe von der jeweiligen Soll-Position (S),
e) Ermitteln eines Mittelwertes (25) der Abweichungsmaße (A) oder einer Auswahl der Abweichungsmaße (A).

2. Verfahren nach Anspruch 1,
**dadurch gekennzeichnet,**
**dass** eine Bildebene der ersten Bilddaten (20) und eine Bildebene der zweiten Bilddaten (21) parallel ausgerichtet sind und/oder dass die Bildebenen (20, 21) senkrecht ausgerichtet sind zur Längserstreckungsrichtung einer im Träger (5) aufgenommenen Referenzpipette, bei der der Mittelpunkt der Pipettenspitzenöffnung im Zentrum einer axialen Projektion eines kreisringförmigen Umfangsrandes der Einlassöffnung angeordnet ist.

3. Verfahren nach einem der Ansprüche 1 oder 2,
**gekennzeichnet durch**,
mehrfaches Durchführen der Verfahrensschritte a) bis c) für unterschiedliche, bevorzugt zeitlich nacheinander produzierte, Pipettenspitzengruppen und **dadurch** zeitlich beabstandetes Ermitteln mehrerer Mittelwerte (25).

4. Verfahren nach einem der Ansprüche 1 bis 3,
**dadurch gekennzeichnet,**
**dass** auf Basis der mehreren zeitlich nacheinander ermittelten Mittelwerte (25) eine Prognose für einen Zeitpunkt ermittelt wird, an dem ein vorgegebener kritischer Mittelwert (25), insbesondere mit einer vorgegebenen Wahrscheinlichkeit, erreicht oder überschritten werden wird und/oder an dem das Spritzgusswerkzeug (3) ausgetauscht oder instandgesetzt werden sollte.

5. Verfahren nach einem der vorhergehenden Ansprüche,
**dadurch gekennzeichnet,**
**dass** der Träger (5) von einem Zwischenspeicher gebildet wird, in welchem die Pipettenspitzen (7) in kavitätenreinen Untergruppen (8) vor dem Verpacken in Endverpackungen zwischengespeichert werden, oder dass der Träger (5) von einem Zwischenpuffer gebildet wird, in dem gleichzeitig mehrere Pipettenspitzen (7) aus unterschiedlichen Kavitäten (2), insbesondere vor dem Überführen in einen Zwischenspeicher mit kavitätenreinen Untergruppen (8), überführt werden, oder dass der Träger (5) von einer Endverpackungseinheit gebildet wird, in der bevorzugt nur Pipettenspitzen (7) aus einer einzigen Kavität (2) oder in kavitätenreinen Gruppen abgelegt sind, wobei bevorzugt die Anzahl der Gruppen geringer ist als die Anzahl von, bevorzugt kreisförmig angeordneten Kavitäten (2), der Spritzgussvorrichtung.

6. Verfahren nach einem der vorhergehenden Ansprüche,
**dadurch gekennzeichnet,**
**dass** überprüft wird, ob ein ermittelter Mittelwert (25) einen vorgegebenen kritischen Mittelwert erreicht oder überschreitet und dass ein Erreichen und/oder Überschreiten des vorgegebenen kritischen Mittelwertes, insbesondere optisch und/oder akustisch, angezeigt wird.

7. Verfahren nach einem der vorhergehenden Ansprüche,
**dadurch gekennzeichnet,**
**dass** die Pipettenspitzengruppe, insbesondere ausschließlich, Pipettenspitzen (7) aus einer bestimmten Kavität (2) der Spritzgussvorrichtung aufweist und/oder dass die Pipettenspitzengruppe ausschließlich Pipettenspitzen (7) von gleichzeitig in dem Träger (5) angeordneten Pipettenspitzen (7) umfasst oder Pipettenspitzen (7) von, insbesondere teilweise oder ausschließlich, zeitlich nacheinander, d.h. nicht gleichzeitig, in dem Träger (5) angeordneten Pipettenspitzen (7).

8. Verfahren nach einem der vorhergehenden Ansprüche,
**dadurch gekennzeichnet,**
**dass** die Auswahl von Pipettenspitzen (7) der Pipettenspitzengruppe zu denen jeweils das Abweichungsmaß bestimmt wird ausschließlich Pipettenspitzen (7) umfasst, bei denen sich die Pipettenspitzenauslassöffnung (16) in einem in einer festen geometrischen Beziehung zu einem Einspritzpunkt (E) der Pipettenspitzen (7) angeordneten Teilabschnitt (24), insbesondere einen vorgegebenen Kreissegmentabschnitt der ersten Bilddaten (20) befindet und/oder dass die Auswahl der Abweichungsmaße ausschließlich Abweichungsmaße von Pipettenspitzen (7) umfasst bei denen sich die Pipettenspitzenauslassöffnung (16) in einem in einer festen geometrischen Beziehung zu einem Einspritzpunkt (E) der Pipettenspitzen (7) angeordneten Teilabschnitt (24), insbesondere einen vorgegebenen Kreissegmentabschnitt der Bilddaten (20, 21) befindet.

9. Vorrichtung zur Beurteilung eines Pipettenspitzenverzuges und/oder Spritzgusswerkzeugfehlers bei der Produktion von Pipettenspitzen (7), insbesondere ausgebildet zur Durchführung eines Verfahrens nach einem der vorhergehenden Ansprüche, umfassend,
a) Positioniermittel (4) zum Überführen von Pipettenspitzen (7) aus einer mehrere, insbesondere kreisförmig angeordnete, von jeweils einem Spritzgusswerkzeug (3) begrenzte, zur Herstellung von Pipettenspitzen (7) ausgebildete Kavitäten (2) aufweisenden Spritzgussvorrichtung (1) in einen Träger (5), der ausgebildet ist zur gleichzeitigen Aufnahme einer Mehrzahl von Pipettenspitzen (7),
b) erste Bilderfassungmittel (12) zum jeweiliges Erfassen von ersten Bilddaten (20) von Pipettenspitzenauslassöffnungen von in dem Träger (5) gleichzeitig und/oder zeitlich nacheinander angeordneten Pipettenspitzen (7) einer Pipettenspitzengruppe zur Bestimmung der Ist-Position (I) der Pipettenspitzenauslassöffnung (16) der jeweiligen Pipettenspitze (7),
c) zweite Bilderfassungsmittel (13) zum jeweiligen Erfassen von zweiten Bilddaten (21) der Pipettenspitzen (7) der Pipettenspitzengruppe zur Bestimmung einer Soll-Position (S) der Pipettenspitzenauslassöffnung (16) der jeweiligen Pipettenspitze (7), wobei die zweiten Bilderfassungsmittel (13) fest relativ zu den ersten Bilderfassungsmitteln (12) positioniert sind, wobei die ersten Bilderfassungsmittel (12) die ersten Bilddaten (20) aus einer Blickrichtung auf ein die Pipettenspitze (7) aufweisendes unteres Pipettenspitzenende erfassend angeordnet sind und wobei die zweiten Bilderfassungsmittel (13) die zweiten Bilddaten (21) aus einer entgegengesetzten Blickrichtung auf ein eine Einlassöffnung aufweisendes oberes Pipettenspitzenende erfassend angeordnet sind,
d) signalleitend mit den ersten und zweiten Bilderfassungmitteln (12, 13) verbundene Auswertemittel (10) die zum Ermitteln der Abweichungsmaße der jeweiligen Ist-Position (I) der Pipettenspitzenauslassöffnungen (16) der Pipettenspitzengruppe oder einer Auswahl von Pipettenspitzen (7) der Pipettenspitzengruppe von der jeweiligen Soll-Position (S) und zum Ermitteln eines Mittelwertes (25) der Abweichungsmaße oder einer Auswahl der Abweichungsmaße ausgebildet sind.

10. Vorrichtung nach Anspruch 9,
**dadurch gekennzeichnet,**
**dass** die Auswertemittel (10) auf Basis mehreren zeitlich nacheinander ermittelter und in einem Speicher abgelegten Mittelwerte (24) eine Prognose für einen Zeitpunkt ermittelt ausgebildet sind, an dem ein vorgegebener kritischer Mittelwert mit einer vorgegebenen Wahrscheinlichkeit überschritten werden wird und/oder an dem das Spritzgusswerkzeug (3) ausgetauscht oder Instand gesetzt werden sollte.

11. Vorrichtung nach Anspruch 10,
**gekennzeichnet durch**,
Ausgabemittel zur Ausgabe der Prognose.

12. Vorrichtung nach einem der Ansprüche 9 bis 11,
**dadurch gekennzeichnet,**
**dass** die Auswertemittel (10) derart ausgebildet sind, dass diese die Auswahl von Pipettenspitzen (7) der Pipettenspitzengruppe zu denen jeweils das Abweichungsmaß bestimmt wird so tätigen, dass die Auswahl ausschließlich Pipettenspitzen (7) umfasst, bei denen sich die Pipettenspitzenauslassöffnung (16) in einem vorgegebenen Abschnitt, insbesondere einen vorgegebenen Kreissegmentabschnitt der Bilddaten (20, 21) befindet und/oder derart, dass die Auswahl der Abweichungsmaße ausschließlich Abweichungsmaße von Pipettenspitzen (7) umfasst, bei denen sich die Pipettenspitzenauslassöffnung (16) in einem vorgegebenen Abschnitt, insbesondere einen vorgegebenen Kreissegmentabschnitt der Bilddaten (20, 21) befindet.

13. Vorrichtung nach einem der Ansprüche 9 bis 12,
**dadurch gekennzeichnet,**
**dass** der Träger (5) von einem Zwischenspeicher gebildet ist, in welchem die Pipettenspitzen (7) in kavitätenreinen Untergruppen (8) vor dem Verpacken in Endverpackungen zwischengespeichert werden, oder dass der Träger (5) von einem Zwischenpuffer gebildet ist, in dem gleichzeitig mehrere Pipettenspitzen (7) aus unterschiedlichen Kavitäten (2), insbesondere vor dem Überführen in einen Zwischenspeicher mit kavitätenreinen Untergruppen (8), überführt werden, oder dass der Träger (5) von einer Endverpackungseinheit gebildet wird, in der bevorzugt nur Pipettenspitzen (7) aus einer einzigen Kavität (2) oder in kavitätenreinen Gruppen abgelegt sind, wobei bevorzugt die Anzahl der Gruppen geringer ist als die Anzahl von, bevorzugt kreisförmig angeordneten Kavitäten, der Spritzgussvorrichtung.

14. Vorrichtung nach einem der Ansprüche 9 bis 13,
**dadurch gekennzeichnet,**
**dass** Mittel zum Verstellen der fest zueinander positionierten ersten und zweiten Bilderfassungsmittel (12, 13) relativ zu dem, bevorzugt während des Verstellens unbewegten, Trägers (5) vorgesehen sind.

15. Spritzgussanlage mit einer Spritzgussvorrichtung (1) umfassend mehrere, insbesondere kreisförmig angeordnete, von jeweils einem Spritzgusswerkzeug (3) begrenzte zur Herstellung von Pipettenspitzen (7) ausgebildete Kavitäten (2) und eine dieser zugeordnete Vorrichtung nach einem der Ansprüche 9 bis 14.

## Claims

1. A method for evaluating a pipette tip lag and/or injection mold defect during the production of pipette tips (7), comprising the following steps:
a) Transferring pipette tips (7) from an injection molding device (1) that exhibits several cavities (2), which in particular are circularly arranged and each bordered by an injection mold (3), into a carrier (5) for the simultaneous accommodation (6) of a plurality of pipette tips (7),
b) Respectively acquiring first image data (20) for the pipette tip outlet openings (16) of pipette tips (7) in a pipette tip group that are arranged in the carrier (5) simultaneously and/or in chronological sequence so as to determine the actual position (I) of the pipette tip outlet opening (16) of the respective pipette tip (7) by means of first image acquisition means (12),
c) Respectively acquiring second image data (21) for the pipette tips (7) in the pipette tip group to determine a desired position (S) of the pipette tip outlet opening (16) of the respective pipette tip (7) by means of second image acquisition means (13), which are fixed in place relative to the first image acquisition means (12), wherein the first image acquisition means (12) acquire the first image data (20) in a viewing direction toward a lower pipette tip end exhibiting the pipette tip (7), and the second image acquisition means (13) in an opposite viewing direction toward an upper pipette tip end exhibiting an inlet opening,
d) Determining the variation rates (A) of the respective actual position (I) of the pipette tip outlet openings (16) in the pipette tip group or a selection of pipette tips (7) in the pipette tip group from the respective desired position (S),
e) Determining an average value (25) for the variation rates (A) or a selection of variation rates (A).

2. The method according to claim 1,
**characterized in that**
an image plane of the first image data (20) and an image plane of the second image data (21) are aligned in parallel, and/or that the image planes (20, 21) are perpendicularly aligned to the longitudinal extension direction of a reference pipette incorporated in the carrier (5), in which the midpoint of the pipette tip opening is situated in the center of an axial projection of a circular peripheral edge of the inlet opening.

3. The method according to one of claims 1 or 2,
**characterized by**
repeatedly performing procedural steps a) to c) for various pipette tip groups, preferably produced in chronological sequence, and thus determining several average values (25) at chronological intervals.

4. The method according to one of claims 1 to 3,
**characterized in that**,
based on the several average values (25) determined in chronological sequence, a prognosis is determined for a point in time at which a prescribed critical average value (25) is achieved or exceeded, in particular with a prescribed probability, and/or at which the injection mold (3) should be replaced or repaired.

5. The method according to one of the preceding claims,
**characterized in that**
the carrier (5) is comprised of an intermediate store, in which the pipette tips (7) are intermediately stored in cavity-clean subgroups (8) before packaged into final packages, or that the carrier (5) is comprised of an intermediate buffer, in which several pipette tips (7) from varying cavities (2) are simultaneously transferred, in particular prior to the transfer to an intermediate store with cavity-clean subgroups (8), or that the carrier (5) is comprised of a final packaging unit, in which preferably only pipette tips (7) from a single cavity (2) or in cavity-clean groups are deposited, wherein the number of groups is preferably smaller than the number of preferably circularly arranged cavities (2) of the injection molding device.

6. The method according to one of the preceding claims,
**characterized in that**
a check is performed to see whether a determined average value (25) reaches or exceeds a prescribed critical average value, and that the fact that the prescribed critical average value has been reached and/or exceeded is displayed, in particular visually and/or acoustically.

7. The method according to one of the preceding claims,
**characterized in that**
the pipette tip group, in particular exclusively, exhibits pipette tips (7) from a specific cavity (2) of the injection molding device and/or that the pipette tip group encompasses exclusively pipette tips (7) of pipette tips (7) simultaneously situated in the carrier (5) or pipette tips (7) of pipette tips (7) situated in chronological sequence, i.e., not simultaneously, in the carrier (5), in particular partially or exclusively.

8. The method according to one of the preceding claims,
**characterized in that**
the selection of pipette tips (7) in the pipette tip group for which the variation rate is determined encompasses exclusively pipette tips (7) in which the pipette tip outlet opening (16) is located in a partial section (24) in a fixed geometric relationship to an injection point (E) of the pipette tips (7), in particular a prescribed circular segment section of the first image data (20) and/or that the selection of variation rates encompasses exclusively variation rates of pipette tips (7) in which the pipette tip outlet opening (16) is located in a partial section (24) in a fixed geometric relationship to an injection point (E) of the pipette tips (7), in particular a prescribed circular segment section of the image data (20, 21).

9. A device for evaluating a pipette tip lag and/or injection mold defect during the production of pipette tips (7), in particular designed to implement a method according to one of the preceding claims, comprising:
a) Positioning means (4) for transferring pipette tips (7) from an injection molding device (1) that exhibits several cavities (2), which in particular are circularly arranged, each bordered by an injection mold (3), and designed for manufacturing pipette tips (7), into a carrier (5) designed for the simultaneous accommodation of a plurality of pipette tips (7),
b) First image acquisition means (12) for respectively acquiring first image data (20) for the pipette tip outlet openings of pipette tips (7) in a pipette tip group that are arranged in the carrier (5) simultaneously and/or in chronological sequence so as to determine the actual position (I) of the pipette tip outlet opening (16) of the respective pipette tip (7),
c) Second image acquisition means (13) for respectively acquiring second image data (21) for the pipette tips (7) in the pipette tip group to determine a desired position (S) of the pipette tip outlet opening (16) of the respective pipette tip (7), wherein the second image acquisition means (13) are fixed in place relative to the first image acquisition means (12), wherein the first image acquisition means (12) are arranged to acquire the first image data (20) in a viewing direction toward a lower pipette tip end exhibiting the pipette tip (7), and wherein the second image acquisition means (13) are arranged to acquire the second image data (21) in an opposite viewing direction toward an upper pipette tip end exhibiting an inlet opening,
d) Evaluation means (10) connected with the first and second image acquisition means (12, 13) in a signal-conducting manner, which are designed to determine the variation rates of the respective actual position (I) of the pipette tip outlet openings (16) of the pipette tip group or a selection of pipette tips (7) in the pipette tip group from the respective desired position (S), and to determine an average value (25) for the variation rates or a selection of variation rates.

10. The device according to claim 9,
**characterized in that**
the evaluation means (10) are designed to determine a prognosis for a point in time at which a prescribed critical average value is exceeded with a prescribed probability, and/or at which the injection mold (3) should be replaced or repaired, based on several average values (24) determined in chronological sequence and stored in a memory.

11. The device according to claim 10,
**characterized by**
output means for outputting the prognosis.

12. The device according to one of claims 9 to 11,
**characterized in that**
the evaluation means (10) are designed so as to actuate the selection of pipette tips (7) in the pipette tip group for which the respective variation rate is determined in such a way that the selection exclusively encompasses pipette tips (7) in which the pipette tip outlet opening (16) is located in a prescribed section, in particular a prescribed circular segment section of the image data (20, 21), and/or in such a way that the selection of variation rates exclusively encompasses variation rates of pipette tips (7) in which the pipette tip outlet opening (16) is located in a prescribed section, in particular a prescribed circular segment section of the image data (20, 21).

13. The device according to one of claims 9 to 12,
**characterized in that**
the carrier (5) is comprised of an intermediate store, in which the pipette tips (7) are intermediately stored in cavity-clean subgroups (8) before packaged into final packages, or that the carrier (5) is comprised of an intermediate buffer, in which several pipette tips (7) from varying cavities (2) are simultaneously transferred, in particular prior to the transfer to an intermediate store with cavity-clean subgroups (8), or that the carrier (5) is comprised of a final packaging unit, in which preferably only pipette tips (7) from a single cavity (2) or in cavity-clean groups are deposited, wherein the number of groups is preferably smaller than the number of preferably circularly arranged cavities of the injection molding device.

14. The device according to one of claims 9 to 13,
**characterized in that** means are provided for adjusting the mutually fixedly positioned first and second image acquisition means (12, 13) relative to the carrier (5), which is preferably not moved during the adjustment.

15. An injection molding system with an injection molding device (1) comprising several, in particular circularly arranged cavities (2), which are bordered by a respective injection mold (3) and designed to manufacture pipette tips (7), and a device according to one of claims 9 to 14 allocated thereto.

## Revendications

1. Procédé d'évaluation d'une déformation de pointe de pipette et/ou d'une erreur d'outil de moulage par injection lors de la production de pointes de pipette (7), comprenant les étapes suivantes :
a) transfert de pointes de pipette (7) depuis un dispositif de moulage par injection (1), possédant plusieurs cavités (2) notamment disposées en forme de cercle et respectivement délimitées par un outil de moulage par injection (3), dans un support (5) destiné à accueillir simultanément (6) une pluralité de pointes de pipette (7),
b) acquisition respective de premières données d'image (20) d'ouvertures de sortie de pointes de pipette (16) des pointes de pipette (7) d'un groupe de pointes de pipette disposées simultanément et/ou chronologiquement les unes après les autres dans le support (5) en vue de déterminer la position réelle (I) de l'ouverture de sortie de pointes de pipette (16) de la pointe de pipette (7) correspondante à l'aide de premiers moyens d'acquisition d'image (12),
c) acquisition respective de deuxièmes données d'image (21) des pointes de pipette (7) du groupe de pointes de pipette en vue de déterminer une position de consigne (S) de l'ouverture de sortie de pointes de pipette (16) de la pointe de pipette (7) correspondante à l'aide de deuxièmes moyens d'acquisition d'image (13) qui sont placés en position fixe par rapport aux premiers moyens d'acquisition d'image (12), les premiers moyens d'acquisition d'image (12) acquérant les premières données d'image (20) depuis une direction d'observation sur l'extrémité de pointe de pipette inférieure présentant la pointe de pipette (7) et les deuxièmes moyens d'acquisition d'image (13) avec une direction d'observation opposée sur une extrémité de pointe de pipette présentant une ouverture d'entrée,
d) détermination de la cote d'écart (A) de la position réelle (I) respective des ouvertures de sortie de pointes de pipette (16) du groupe de pointes de pipette ou d'une sélection de pointes de pipette (7) du groupe de pointes de pipette par rapport à la position de consigne (S) respective,
e) détermination d'une valeur moyenne (25) des cotes d'écart (A) ou d'une sélection de cotes d'écart (A).

2. Procédé selon la revendication 1,
**caractérisé en ce**
**qu'**un plan d'image des premières données d'image (20) et un plan d'image des deuxièmes données d'image (21) sont orientés parallèlement et/ou en ce que les plans d'image (20, 21) sont orientés perpendiculairement au sens de projection longitudinal d'une pipette de référence accueillie dans le support (5), avec laquelle le point central de l'ouverture de pointe de pipette est disposé au centre d'une projection axiale d'un bord périphérique de forme annulaire de l'ouverture d'entrée.

3. Procédé selon l'une des revendications 1 ou 2,
**caractérisé par** l'exécution à plusieurs reprises des étapes a) à c) pour différents groupes de pointes de pipette, de préférence produits chronologiquement les uns après les autres, et ainsi détermination espacée dans le temps de plusieurs valeurs moyennes (25).

4. Procédé selon l'une des revendications 1 à 3,
**caractérisé en ce**
**qu'**en se basant sur plusieurs valeurs moyennes (25) déterminées chronologiquement les unes après les autres, une prévision est déterminée d'un instant auquel une valeur moyenne (25) critique prédéfinie, notamment avec une probabilité prédéfinie, sera atteinte ou dépassée et/ou auquel l'outil de moulage par injection (3) doit être remplacé ou réparé.

5. Procédé selon l'une des revendications précédentes,
**caractérisé en ce**
**que** le support (5) est formé par un accumulateur intermédiaire dans lequel les pointes de pipette (7) sont stockées temporairement en sous-groupes (8) nets d'une cavité avant le conditionnement dans les emballages finaux, ou en ce que le support (5) est formé par un tampon intermédiaire dans lequel sont transférées simultanément plusieurs pointes de pipette (7) depuis différentes cavités (2), notamment avant le transfert dans un accumulateur intermédiaire avec des sous-groupes (8) nets de cavités, ou en ce que le support (5) est formé par une unité d'emballage final dans laquelle ne sont déposées de préférence que des pointes de pipette (7) en provenance d'une seule cavité (2) ou en groupes nets d'une cavité, le nombre de groupes étant de préférence inférieur au nombre de cavités (2), de préférence disposées de manière circulaire, du dispositif de moulage par injection.

6. Procédé selon l'une des revendications précédentes,
**caractérisé en ce**
**qu'**un contrôle est effectué pour vérifier si une valeur moyenne (25) déterminée atteint ou dépasse une valeur moyenne critique prédéfinie et en ce que l'atteinte et/ou le dépassement de la valeur moyenne critique prédéfinie est notamment indiqué(e) visuellement et/ou acoustiquement.

7. Procédé selon l'une des revendications précédentes,
**caractérisé en ce**
**que** le groupe de pointes de pipette possède, notamment exclusivement, des pointes de pipette (7) provenant d'une cavité (2) donnée du dispositif de moulage par injection et/ou en ce que le groupe de pointes de pipette possède exclusivement des pointes de pipette (7) de pointes de pipette (7) disposées simultanément dans le support (5) ou des pointes de pipette (7) de pointes de pipette (7) disposées, notamment partiellement ou exclusivement, chronologiquement les unes après les autres, c'est-à-dire non simultanément, dans le support (5).

8. Procédé selon l'une des revendications précédentes,
**caractérisé en ce**
**que** la sélection des pointes de pipette (7) du groupe de pointes de pipette pour lesquelles la cote d'écart est respectivement déterminée comprend exclusivement des pointes de pipette (7) avec lesquelles l'ouverture de sortie de pointes de pipette (16) se trouve dans une portion partielle (24) disposée dans une relation géométrique fixe par rapport à un point d'injection (E) des pointes de pipette (7), notamment une portion de segment de cercle prédéfinie des premières données d'image (20) et/ou en ce que la sélection des cotes d'écart comprend exclusivement les cotes d'écart des pointes de pipette (7) avec lesquelles l'ouverture de sortie de pointes de pipette (16) se trouve dans une portion partielle (24) disposée dans une relation géométrique fixe par rapport à un point d'injection (E) des pointes de pipette (7), notamment une portion de segment de cercle prédéfinie des données d'image (20, 21).

9. Dispositif d'évaluation d'une déformation de pointe de pipette et/ou d'une erreur d'outil de moulage par injection lors de la production de pointes de pipette (7), notamment configuré pour mettre en oeuvre un procédé selon l'une des revendications précédentes, comprenant :
a) des moyens de positionnement (4) destinés à transférer des pointes de pipette (7) depuis un dispositif de moulage par injection (1), possédant plusieurs cavités (2) notamment disposées en forme de cercle, respectivement délimitées par un outil de moulage par injection (3) et configurées pour la production de pointes de pipette (7), dans un support (5) qui est configuré pour accueillir simultanément une pluralité de pointes de pipette (7),
b) des premiers moyens d'acquisition d'image (12) destinés à acquérir respectivement des premières données d'image (20) d'ouvertures de sortie de pointes de pipette (16) des pointes de pipette (7) d'un groupe de pointes de pipette disposées simultanément et/ou chronologiquement les unes après les autres dans le support (5) en vue de déterminer la position réelle (I) de l'ouverture de sortie de pointes de pipette (16) de la pointe de pipette (7) correspondante,
c) des deuxièmes moyens d'acquisition d'image (13) destinés à acquérir respectivement des deuxièmes données d'image (21) des pointes de pipette (7) du groupe de pointes de pipette en vue de déterminer une position de consigne (S) de l'ouverture de sortie de pointes de pipette (16) de la pointe de pipette (7) correspondante, les deuxièmes moyens d'acquisition d'image (13) étant placés en position fixe par rapport aux premiers moyens d'acquisition d'image (12), les premiers moyens d'acquisition d'image (12) étant disposés pour acquérir les premières données d'image (20) depuis une direction d'observation sur l'extrémité de pointe de pipette inférieure présentant la pointe de pipette (7) et les deuxièmes moyens d'acquisition d'image (13) étant disposés pour acquérir les deuxièmes données d'image (21) depuis une direction d'observation opposée orientée sur une extrémité de pointe de pipette supérieure présentant une ouverture d'entrée,
d) des moyens d'interprétation (10) reliés en conduction de signal aux premiers et deuxièmes moyens d'acquisition d'image (12, 13), lesquels sont configurés pour déterminer la cote d'écart de la position réelle (I) respective des ouvertures de sortie de pointes de pipette (16) du groupe de pointes de pipette ou d'une sélection de pointes de pipette (7) du groupe de pointes de pipette par rapport à la position de consigne (S) respective et pour déterminer une valeur moyenne (25) des cotes d'écart ou d'une sélection de cotes d'écart.

10. Dispositif selon la revendication 9,
**caractérisé en ce**
**que** les moyens d'interprétation (10) sont configurés pour, en se basant sur plusieurs valeurs moyennes (24) déterminées chronologiquement les unes après les autres, déterminer une prévision d'un instant auquel une valeur moyenne critique prédéfinie serait dépassée avec une probabilité prédéfinie et/ou auquel l'outil de moulage par injection (3) devrait être remplacé ou réparé.

11. Dispositif selon la revendication 10,
**caractérisé par** des moyens d'affichage destinés à afficher la prévision.

12. Dispositif selon l'une des revendications 9 à 11,
**caractérisé en ce**
**que** les moyens d'interprétation (10) sont configurés de telle sorte que ceux-ci effectuent la sélection de pointes de pipette (7) du groupe de pointes de pipette à propos desquels la cote d'écart est respectivement déterminée de sorte que la sélection comprend exclusivement des pointes de pipette (7) dont l'ouverture de sortie de pointes de pipette (16) se trouve dans une portion prédéfinie, notamment une portion de segment de cercle prédéfinie des données d'image (20, 21) et/ou de sorte que la sélection des cotes d'écart comprend exclusivement les cotes d'écart des pointes de pipette (7) avec lesquelles l'ouverture de sortie de pointes de pipette (16) se trouve dans une portion prédéfinie, notamment une portion de segment de cercle prédéfinie des données d'image (20, 21).

13. Dispositif selon l'une des revendications 9 à 12,
**caractérisé en ce**
**que** le support (5) est formé par un accumulateur intermédiaire dans lequel les pointes de pipette (7) sont stockées temporairement en sous-groupes (8) nets d'une cavité avant le conditionnement dans les emballages finaux, ou en ce que le support (5) est formé par un tampon intermédiaire dans lequel sont transférées simultanément plusieurs pointes de pipette (7) depuis différentes cavités (2), notamment avant le transfert dans un accumulateur intermédiaire avec des sous-groupes (8) nets de cavités, ou en ce que le support (5) est formé par une unité d'emballage final dans laquelle ne sont déposées de préférence que les pointes de pipette (7) en provenance d'une seule cavité (2) ou en groupes nets d'une cavité, le nombre de groupes étant de préférence inférieur au nombre de cavités, de préférence disposées de manière circulaire, du dispositif de moulage par injection.

14. Dispositif selon l'une des revendications 9 à 13,
**caractérisé par** des moyens destinés à positionner les premiers et deuxièmes moyens d'acquisition d'image (12, 13), placés en position fixe les uns par rapport aux autres, par rapport au support (5), de préférence non déplacé pendant le positionnement.

15. Équipement de moulage par injection comprenant un dispositif de moulage par injection (1) incluant plusieurs cavités (2), notamment disposées en forme de cercle, respectivement délimitées par un outil de moulage par injection (3) et configurées pour la production de pointes de pipette (7) et un dispositif selon l'une des revendications 9 à 14 associé à celui-ci.
